(19) Europäisches Patentamt
European Patent Office
Office européen des brevets

(11) **EP 2 860 644 A1**

## EUROPEAN PATENT APPLICATION
published in accordance with Art. 153(4) EPC

(43) Date of publication:
**15.04.2015 Bulletin 2015/16**

(21) Application number: **13836742.0**

(22) Date of filing: **13.09.2013**

(51) Int Cl.:
**G06F 17/30** (2006.01)

(86) International application number:
**PCT/CN2013/083515**

(87) International publication number:
**WO 2014/040560 (20.03.2014 Gazette 2014/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.09.2012 CN 201210345450**

(71) Applicant: **Tencent Technology (Shenzhen) Co., Ltd
Guangdong 518000 (CN)**

(72) Inventor: **WANG, Dewen
Shenzhen
Guangdong 518000 (CN)**

(74) Representative: **Gunzelmann, Rainer
Wuesthoff & Wuesthoff
Patent- und Rechtsanwälte
Schweigerstraße 2
81541 München (DE)**

(54) **METHOD AND DEVICE FOR PUSHING MEDIA INFORMATION IN REAL TIME**

(57)    It is described a method for pushing media information in real time, where information of user focus on a current page is determined, a keyword is searched for according to the information of user focus, and media information matching the found keyword is pushed in real time. It is also described a device for pushing media information in real time. With what described, it is possible to improve real-time performance and accuracy in pushing media information.

Fig.1

```
┌─────────────────────────────────────────────┐
│ 101. information of user focus on a current  │
│        page is determined                    │
└─────────────────────────────────────────────┘
                      │
                      ▼
┌─────────────────────────────────────────────┐
│ 102. media information matching the          │
│   information of user focus is pushed in     │
│   real time                                  │
└─────────────────────────────────────────────┘
```

## Description

The present application claims the priority of CN application No. 201210345450.5, titled "METHOD AND DEVICE FOR PUSHING MEDIA INFORMATION IN REAL TIME ACCORDING TO INFORMATION OF USER FOCUS" filed on September 17, 2012 by TENCENT Technology (Shenzhen) Company Limited, the disclosure of which is incorporated by reference herein in its entirety.

## TECHNICAL FIELD

The present disclosure relates to the field of internet information release, and in particular to a method and device for pushing media information in real time according to information of user focus.

## BACKGROUND

At present, beside the body of an online article, there is generally an information block, inside which a lot of text or picture information is pushed. Differing from a general bidding rank or text link, the text or picture information inside the information block is associated with context of the article. For example, it is possible to see, beside the body of an article on a most recent car, an information block related to the car sale or service.

Content of an article may be fetched and analyzed in an earlier stage, such that text or picture information associated with the content of the article is defined, and fixedly pushed so as to be shown in an information block beside the body of the article. However, this does not mean that a user will look at or see the whole content of the article. The user may care for content of only a section of the article or some other content. Thus, when the article is browsed, what shown in the information block beside the body will always be the text or picture information associated with the whole content of the article, thereby failing to accurately push information associated with information of user focus.

## SUMMARY

In view of this, it is desired that embodiments of the present disclosure provide a method and device for pushing media information in real time, capable of improving real-time performance and accuracy in pushing media information.

To this end, a technical solution of an embodiment of the present disclosure is implemented as follows.

A method for pushing media information in real time provided by an embodiment of the present disclosure includes steps of: determining information of user focus on a current page; and pushing, in real time, media information matching the information of user focus.

A device for pushing media information in real time provided by an embodiment of the present disclosure includes an information-of-user-focus determining module and a real-time pushing module,

the information-of-user-focus determining module is configured for determining information of user focus on a current page, and

the real-time pushing module is configured for pushing, in real time, media information matching the information of user focus.

Embodiments of the present disclosure provide a method and device for pushing media information in real time, where information of user focus on a current page is determined, and media information matching the information of user focus is pushed in real time. It is thus possible to improve real-time performance and accuracy in pushing media information.

## BRIEF DESCRIPTION OF THE DRAWINGS

Fig.1 is a flowchart of a method for pushing media information in real time based on information of user focus according to an embodiment of the present disclosure; and

Fig.2 is a schematic diagram of a structure of a device for pushing media information in real time based on information of user focus according to an embodiment of the present disclosure.

## DETAILED DESCRIPTION

In an embodiment of the present disclosure, information of user focus on a current page is determined, and media information matching the information of user focus is pushed in real time. The media information may be information such as text or a picture.

The present disclosure is further elaborated below with reference to drawings and specific embodiments.

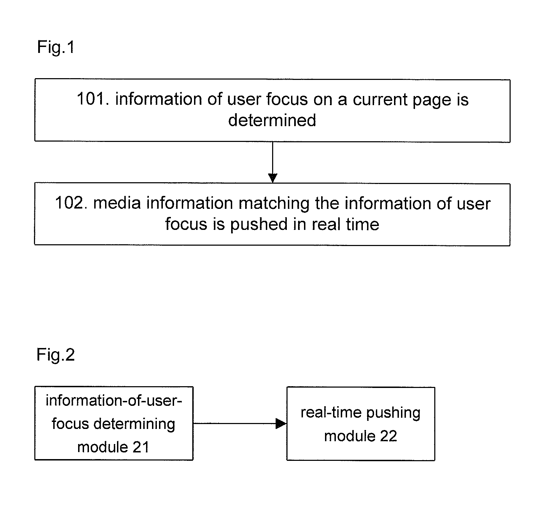

An embodiment of the present disclosure provides a method for pushing media information in real time based on information of user focus. As shown in Fig.1, the method includes steps as follows.

In step 101, information of user focus on a current page is determined.

In an embodiment, a computer background may acquire an offset height of each element in content of a webpage browsed by a user and an offset height of an element shown in the current page, and determine, according to the offset height of each element in the content of the webpage browsed by the user and the offset height of the element shown in the current page, content or an identity (ID) of the element shown in the current page as the information of user focus on the current page.

The computer background may acquire the offset height of each element in the content of the webpage browsed by the user and the offset height of the element shown in the current page by: loading the content of the webpage by the computer background; when the user browses the content of the webpage and stays at an arbitrary position on a page, acquiring, via an element-top acquiring function, the offset height of each element in the content of the webpage; acquiring, via a page acquiring function, a size of the webpage and a size of the page; acquiring, via a scrollbar-position acquiring function, a position of a scrollbar on the current page; acquiring, according to the offset height of each element in the content of the webpage, the size of the webpage and the size of the page, and the position of the scrollbar on the current page, the offset height of the element shown in the current page. The content of the webpage includes content posted in a micro-blog or a forum by a user.

An aforementioned element may be independent information in the webpage, such as micro-blog content by a user or a comment or reply by a user in a page.

In a micro-blog scenario, step 101 may be divided into steps as follows.

In step 201, when the user browses a micro-blog and stays at an arbitrary position on a page, the computer background may acquire, via an element-top acquiring function *getElementTop,* the offset height of each micro-blog. For example, the offset height of the first micro-blog may be acquired as follows:

```
>>getElementTop       (document.getElementBy-
ID('46258092435294'))
408,
```

where '46258092435294' may be the ID of the first micro-blog, 408 may be the obtained offset height of the first micro-blog.

In step 202, a size of the webpage and a size of the page may be obtained via a page acquiring function *GetPageSize:*

```
>>GetPageSize()
{
  PageW: 1419,
  PageH: 8464,
  WinW: 1419,
  WinH: 770
}.
```

where PageW denotes an obtained webpage width, PageH denotes an obtained webpage height, WinW denotes an obtained display width, WinH denotes an obtained display height.

In step 203, a position of a scrollbar on the current page is obtained via a scrollbar-position acquiring function *GetPageScroll:*

```
>>GetPageScroll()
{
  X: 0,
  Y: 231
},
```

where X denotes the position of a horizontal scrollbar, Y denotes the height of a vertical scrollbar.

In step 204, the information of user focus on a current micro-blog page is obtained.

Assume that the offset height of the first micro-blog is W1, the height of each micro-blog other than the first micro-blog is WHi, the height of a vertical scrollbar on the current page is S, and a page height is WH; then the offset height WHx of a micro-blog shown in the current page should meet a condition *min(S,W1)<WHx<S+WH.* At least one WHx meeting the condition is obtained via formula (1), where x denotes the x$^{th}$ micro-blog; and the content or the ID of the x$^{th}$ micro-blog is the information of user focus on the current page.

$$WHx = W1 + \sum_{i=2}^{x} WHi \qquad (1)$$

The step may further include that: pre-recorded via an operation habit database is an operation position on a page where the user operates each element in the content of the webpage; a most probable operation position is found by statistics; after an element shown in the current page is determined, an element the user focuses on is determined according to the most probable operation position; the content or the ID of the element the user focuses on is the information of user focus on the current page.

In step 102, media information matching the information of user focus is pushed in real time.

In an embodiment, a keyword is searched for according to the information of user focus; and the media information matching the found keyword is pushed in real time.

The keyword may be found according to the information of user focus specifically by: determining, by the computer background, content shown in the current page according to the information of user focus; performing semantic analysis on the content shown in the current page; and finding the keyword matching a keyword in a media database. The media database may be a preset database storing media information and a keyword corresponding to the media information.

The media information matching the found keyword may be pushed in real time specifically by: pushing, by the computer background, media information in the media database in real time, wherein the pushed media information in the media database matches the found keyword.

In the step, the computer background may push, in real time, media information in the media database that matches the found keyword by: suspending or embedding the media information in the media database that matches the found keyword, at a position with preset coordinates where media information is to be shown on a page.

To implement an aforementioned method, an embodiment of the present disclosure further provides a device for pushing media information in real time according to information of user focus. As shown in Fig.2, the device includes an information-of-user-focus determining module 21 and a real-time pushing module 22.

The information-of-user-focus determining module 21 is configured for determining information of user focus on a current page.

The real-time pushing module 22 is configured for pushing, in real time, media information matching the information of user focus.

The information-of-user-focus determining module 21 may specifically be configured for: acquiring, via a computer background, an offset height of each element in content of a webpage browsed by a user and an offset height of an element shown in the current page; and determining, according to the offset height of each element in the content of the webpage browsed by the user and the offset height of the element shown in the current page, content or an ID of the element shown in the current page as the information of user focus on the current page.

The real-time pushing module 22 may specifically be configured for: searching for a keyword according to the information of user focus; and pushing, in real time, the media information matching the found keyword.

In an embodiment, the real-time pushing module 22 may be configured for: determining content shown in the current page according to the information of user focus; performing semantic analysis on the content shown in the current page; finding the keyword matching a keyword in a media database; and pushing media information in the media database in real time, wherein the pushed media information in the media database matches the found keyword.

When implemented in form of a software functional module and sold or used as an independent product, the method for pushing media information in real time according to an embodiment of the present disclosure may also be stored in a non-transitory computer-readable storage medium. Based on such an understanding, the essential part or a part contributing to prior art of the technical solution of an embodiment of the present disclosure may appear in form of a software product which is stored in storage media and includes a number of instructions for allowing a computer equipment (such as a personal computer, a server, a network equipment, or the like) to execute all or part of the methods in various embodiments of the present disclosure. The storage media include various media that can store program codes such as a U disk, a mobile hard disk, a Read-Only Memory (ROM), a Random Access Memory (RAM), a magnetic disk, a CD, and the like. Thus, an embodiment of the present disclosure is not limited to any specific combination of hardware and software.

Accordingly, an embodiment of the present disclosure further provides a computer storage medium storing a computer program for executing the method for pushing media information in real time according to information of user focus according to an embodiment of the present disclosure.

To sum up, with an embodiment of the present disclosure, media information is pushed in real time according to the information of user focus, thereby improving real-time performance and accuracy in pushing media information.

What describe are merely embodiments of the present disclosure, and are not intended to limit the scope of the present disclosure.

**Claims**

1. A method for pushing media information in real time, comprising:

   determining information of user focus on a current page; and
   pushing, in real time, media information matching the information of user focus.

2. The method according to claim 1, wherein the determining information of user focus on a current page comprises:

   acquiring, by a computer background, an offset height of each element in content of a webpage browsed by a user and an offset height of an element shown in the current page; and
   determining, according to the offset height of each element in the content of the webpage browsed by the user and the offset height of the element shown in the current page, content or an ID of the element shown in the current page as the information of user focus on the current page.

3. The method according to claim 2, wherein the acquiring, by a computer background, an offset height of each element in content of a webpage browsed by a user and an offset height of an element shown in the current page comprises:

   loading, by the computer background, the content of the webpage;
   when the user browses the content of the webpage and stays at an arbitrary position on a page, acquiring, via an element-top acquiring function, the offset height of each element in the content of the webpage;
   acquiring, via a page acquiring function, a size of the webpage and a size of the page;
   acquiring, via a scrollbar-position acquiring function, a position of a scrollbar on the current page; and
   acquiring, according to the offset height of each element in the content of the webpage, the size of the webpage and the size of the page, and the position of the scrollbar on the current page, the offset height of the element shown in the current page.

4. The method according to claim 3, wherein the pushing, in real time, media information matching the information of user focus comprises:

searching for a keyword according to the information of user focus; and
pushing, in real time, the media information matching the found keyword.

5. The method according to claim 4, wherein the searching for a keyword according to the information of user focus comprises:

determining, by the computer background, content shown in the current page according to the information of user focus;
performing semantic analysis on the content shown in the current page; and
finding, from the information obtained through the semantic analysis, the keyword matching a keyword in a media database.

6. The method according to claim 5, wherein the pushing, in real time, the media information matching the found keyword comprises:

pushing, by the computer background, media information in the media database in real time, wherein the pushed media information in the media database matches the found keyword.

7. The method according to claim 2, wherein the content of the webpage comprises content posted in a micro-blog or a forum by a user.

8. A device for pushing media information in real time, comprising:

an information-of-user-focus determining module, configured to determine information of user focus on a current page; and
a real-time pushing module, configured to push, in real time, media information matching the information of user focus.

9. The device according to claim 8, wherein the information-of-user-focus determining module is configured to: acquire, via a computer background, an offset height of each element in content of a webpage browsed by a user and an offset height of an element shown in the current page; and determine, according to the offset height of each element in the content of the webpage browsed by the user and the offset height of the element shown in the current page, content or an ID of the element shown in the current page as the information of user focus on the current page.

10. The device according to claim 8, wherein the real-time pushing module is configured to: search for a keyword according to the information of user focus; and push, in real time, the media information matching the found keyword.

Fig.1

```
┌─────────────────────────────────────────────────┐
│  101. information of user focus on a current     │
│              page is determined                  │
└─────────────────────────────────────────────────┘
                        │
                        ▼
┌─────────────────────────────────────────────────┐
│  102. media information matching the information │
│        of user focus is pushed in real time      │
└─────────────────────────────────────────────────┘
```

Fig.2

```
┌──────────────────────┐         ┌──────────────────────┐
│ information-of-user-  │         │                      │
│ focus determining     │────────▶│  real-time pushing   │
│ module 21             │         │  module 22           │
└──────────────────────┘         └──────────────────────┘
```

# INTERNATIONAL SEARCH REPORT

| International application No. |
|---|
| PCT/CN2013/083515 |

### A. CLASSIFICATION OF SUBJECT MATTER

G06F 17/30 (2006.01) i

According to International Patent Classification (IPC) or to both national classification and IPC

### B. FIELDS SEARCHED

Minimum documentation searched (classification system followed by classification symbols)

IPC: G06F;

Documentation searched other than minimum documentation to the extent that such documents are included in the fields searched

Electronic data base consulted during the international search (name of data base and, where practicable, search terms used)

WPI, EPODOC, CNKI, CNPAT, IEEE: push, webpage or (web and page, interest+, position, size, region, advertisement, tencent, wang dewen, concentration

### C. DOCUMENTS CONSIDERED TO BE RELEVANT

| Category* | Citation of document, with indication, where appropriate, of the relevant passages | Relevant to claim No. |
|---|---|---|
| X | CN 102546676 A (TENCENT TECHNOLOGY SHENZHEN CO., LTD.) 04 July 2012 (04.07.2012) description, paragraphs [0002]-[0051] | 1, 8, 10 |
| A | CN 1713574 A (SHENZHEN AOTIAN COMMUNICATION CO., LTD.) 28 December 2005 (28.12.2005) the whole document | 1-10 |
| A | CN 101079063 A (TENCENT TECHNOLOGY SHENZHEN CO., LTD.) 28 November 2007 (28.11.2007) the whole document | 1-10 |
| A | US 2005204151 A1 (FORTINET, INC.) 15.9 月 2005 (15.09.2005) the whole document | 1-10 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 November 2013 (22.11.2013) | 12 December 2013 (12.12.2013) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>WANG, Jing<br><br>Telephone No. (86-10) 62413627 |

Form PCT/ISA /210 (second sheet) (July 2009)

## INTERNATIONAL SEARCH REPORT
Information on patent family members

International application No.

PCT/CN2013/083515

| Patent Documents referred in the Report | Publication Date | Patent Family | Publication Date |
|---|---|---|---|
| CN 102546676 A | 04.07.2012 | WO 2012075838 A1 | 14.06.2012 |
| CN 1713574 A | 28.12.2005 | None | |
| CN 101079063 A | 28.11.2007 | None | |
| US 2005204151 A1 | 15.09.2005 | US 2010154064 A1 | 17.06.2010 |
| | | US 2012017277 A1 | 19.01.2012 |
| | | US 2012278896 A1 | 01.11.2012 |
| | | US 2013263246 A1 | 03.10.2013 |

Form PCT/ISA /210 (patent family annex) (July 2009)

**EP 2 860 644 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210345450